# EUROPEAN PATENT SPECIFICATION

(11) **EP 1 501 023 B1**
(45) Date of publication and mention of the grant of the patent: **02.05.2007**
(21) Application number: 04011554.5
(22) Date of filing: 14.05.2004
(51) Int. Cl.: G11B 27/034, G11B 27/28, G11B 31/00

(54) **Data transfer and reproduction system**
System zur Übertragung und Wiedergabe von Daten
Système de transfert et reproduction de données

(30) Priority: 30.05.2003 JP 2003153960
(43) Date of publication of application: 26.01.2005
(73) Proprietor: Pioneer Corporation, Meguro-ku, Tokyo (JP); TechExperts Incorporation, Ohta-ku, Tokyo (JP)
(72) Inventor: Nonaka, Yoshiya, Pioneer Corp. Kawagoe Works, Kawagoe-shi Saitama (JP); Tarui, Nobuo, Pioneer Corp. Kawagoe Works, Kawagoe-shi Saitama (JP); Denda, Akihiro, Pioneer Corp. Kawagoe Works, Kawagoe-shi Saitama (JP); Yamaguchi, Takamasa, Pioneer Corp. Kawagoe Works, Kawagoe-shi Saitama (JP); Sugino, Ryoji, c/o Tech Experts incorporation, Ohta-ku Tokyo (JP)
(74) Representative: Betten & Resch

(56) References cited:
- EP-A- 1 058 257
- EP-A- 1 107 249
- US-A1- 2002 085 456
- US-A1- 2004 015 713
- US-B1- 6 594 740

## Description

### BACKGROUND OF THE INVENTION

### 1. Field of the Invention

The present invention relates to a data transfer and reproduction system which transfers data from a master device to a slave device through, for example, a wired or wireless communication medium, and the like.

### 2. Description of the Related Art

Conventionally, there is a system for accumulating and editing contents data of music, images and the like in a data control device (hereinafter called "a master device") such as a personal computer, a server and the like installed indoors, and for transferring contents data to a car-mounted or portable sound/image reproducing device (hereinafter called "a slave device") put outdoors. US-A-2002/0085456 or Japanese Patent Kokai No. 2002-133834 which are reflected by the preamble of claim 1, for example, disclose such a technology for the system.

Generally, in such conventional technology, when contents data is transferred from the master device to the slave device, processing for transferring contents data is carried out by the following procedure. That is, contents data of music or the like, which a user has newly obtained by purchasing a compact disc or from distribution over a network, is once stored in memory in the master device. Then, the user selects and extracts such newly added contents data from the memory in the master device at arbitrary time, and transfers contents data to memory in the slave device by use of a wired or wireless communication medium. Alternatively, with the use of a portable recording medium such as a memory medium using flash memory and the like, the user himself/herself may move the portable recording medium on which contents data is stored.

The conventional system like this, however, has problems such that the user has to always remember and recognize newly added and already transferred contents data, the operation of procedure for transferring contents data becomes complicated.

### SUMMARY OF THE INVENTION

The present invention has been made to solve these problems, and an object of the present invention is to provide a data transfer and reproduction system which is, for example, easily operated without burdening a user.

Thus object is achieved by the data transfer and reproduction system as specified in claim 1. Further embodiments of the invention are specified in the sub-claims.

A data transfer and reproduction system according to the present invention comprises: a master device including a memory means for storing pieces of contents data in advance, and a transfer means for selectively transferring each piece of contents data stored in the memory means; and a slave device including a receiver/memory means for receiving and storing the piece of contents data transferred from the master device, and a reproduction and player means for selectively reproducing and playing the piece of contents data stored in the receiver/memory means in response to a reproduction command. In this apparatus, the memory means forms and stores a "yet-to-be transferred" identifier corresponding to each piece of contents data, the identifier designating that the piece of contents data is not transferred yet, and the transfer means selects and transfers the piece of contents data corresponding to the "yet-to-be transferred" identifier.

### BRIEF DESCRIPTION OF THE DRAWINGS

Fig. 1 is a block diagram showing an embodiment of a contents data transfer system according to the present invention;
Fig. 2 is a flow chart showing the operation of processing of registration and certification between a master device 10 and a slave device 20 shown in Fig. 1; and
Fig. 3 is a flow chart showing the operation of processing for transferring music contents data between the master device 10 and the slave device 20 shown in Fig. 1.

### DETAILED DESCRIPTION OF THE INVENTION

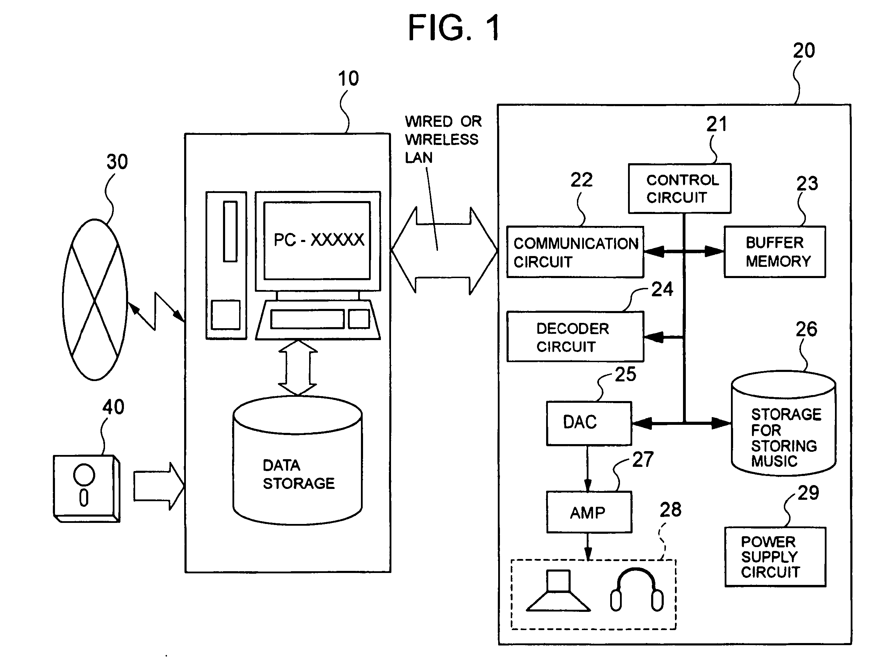

A block diagram of Fig. 1 shows an example of the structure of a data transfer and reproduction system based on the present invention.

In Fig. 1, a master device 10 is a contents data control device such as, for example, a personal computer intended for home use, a server containing a hard disk device and the like. The master device 10 is connected to a slave device 20 described later through a wired or wireless communication medium such as, for example, Bluetooth, IEEE1394, USB, and the like.

The master device 10 is connected to an external network 30 such as the Internet and the like via a predetermined interface circuit (not illustrated), to obtain music contents data from a music distribution site on the network. Moreover, the master device 10 contains a disk drive unit (not illustrated) for a CD-ROM or the like, to newly obtain music contents data from a music recording medium 40 such as a compact disc and the like.

Music contents data obtained by the master device 10 is stored in data storage such as the hard disk device and the like, mounted inside the master device 10. Various application software programs are installed in the master device 10, to carry out processing for controlling copyright on music contents data and the like in conjunction with the slave device 20 described later.

The slave device 20 is, for example, a car-mounted or portable sound/image reproducing device. The slave device 20, as shown in Fig. 1, mainly comprises a control circuit 21, a communication circuit 22, a buffer memory 23, a digital-to-analog converter circuit 25 (hereinafter called "DAC circuit 25"), a storage for storing music data 26, an audio amplifier circuit 27, a sound output device 28, and a power supply circuit 29.

The control circuit 21, which is a section for controlling the operation of the whole slave device 20, mainly comprises a microcomputer, memory such as ROM, RAM and the like, and the peripheral circuits of the microcomputer and memory. The control circuit 21 carries out, for example, the following control processing and the like:
(1) Storing/fetching music contents data transferred from the master device 10 on/from the storage 26 for storing music, and subjecting music contents data to various types of decoding processing if necessary, in order to supply music signals to the audio amplifier circuit 27 through the DAC circuit 25.
(2) Communicating with the master device 10 via the communication circuit 22, in order to carry out processing of cross-certification between the master and slave devices 10 and 20, processing for controlling contents data for copyright control, processing for controlling music contents data and the like.
(3) Governing processing of various types of operation and display in the slave device 20.
(4) Monitoring power supply (battery) voltage, and detecting the completion of electric charge and the like in the power circuit 29.

The communication circuit 22, which is a circuit for establishing communication between the master device 10 and the slave device 20, is composed with the use of various wired or wireless communication mediums such as, for example, a wireless LAN, Bluetooth, USB, IEEE1394 and the like. As shown in Fig. 1, the communication circuit 22 is connected to the control circuit 21 by a bus inside the slave device 20, in order to transmit and receive control data necessary for the various types of operation of the above control circuit 21 and music contents data, between the master device 10 and the slave device 20.

The buffer memory 23, which performs the function of temporarily accumulating music contents data and various types of control data transferred from the master device 10, is composed of semiconductor memory or nonvolatile memory such as, for example, a RAM and the like.

A decoder circuit 24 is a circuit necessary for, for example, decompressing music contents data compressed by a code. Generally, the decoder circuit 24 may be composed of LSI for particular specifications such as a DSP and the like, or may be composed of software processing by the microcomputer contained in the control circuit 21. The decoder circuit 24 is necessary for processing of compressed sound and an image signal, so that the decoder circuit 24 is not an essential component of the slave device 20.

The DAC circuit 25, the audio amplifier circuit 27 and the sound output device 28 compose a section, in which decoded music contents data is amplified to a predetermined level after being converted from digital to analog, and is converted into a sound signal which a user can listen to. The sound output device 28 may be, for example, integrated into the slave device 20 like a speaker system, or externally provided in the slave device 20 like a headphone.

The storage 26 for storing music, which is data memory using, for example, nonvolatile memory or a hard disk device, is a section for mainly storing music contents data transferred from the master device 10, and various types of control contents data accompanying music contents data.

The power supply circuit 29 is a power supply section for operating the slave device 20. The power supply circuit 29 is, for example, a battery of a car when the slave device 20 is mounted on the car, and is an internal battery when the slave device 20 is portable. A predetermined voltage is supplied from the power supply circuit 29 to each component described above. The control circuit 21, as described above, always monitors the voltage value and the electric charge condition of the power circuit 29.

The embodiment of the present invention is not limited to structure described above, and Fig. 1 just shows one of the embodiments of the present invention.

Then, the operation of the data transfer and reproduction system shown in the embodiment of Fig. 1 will be described, with separating from two types of processing, one of which is processing of registration and certification between the master device 10 and the slave device 20, and the other of which is processing for transferring music contents data between both devices.

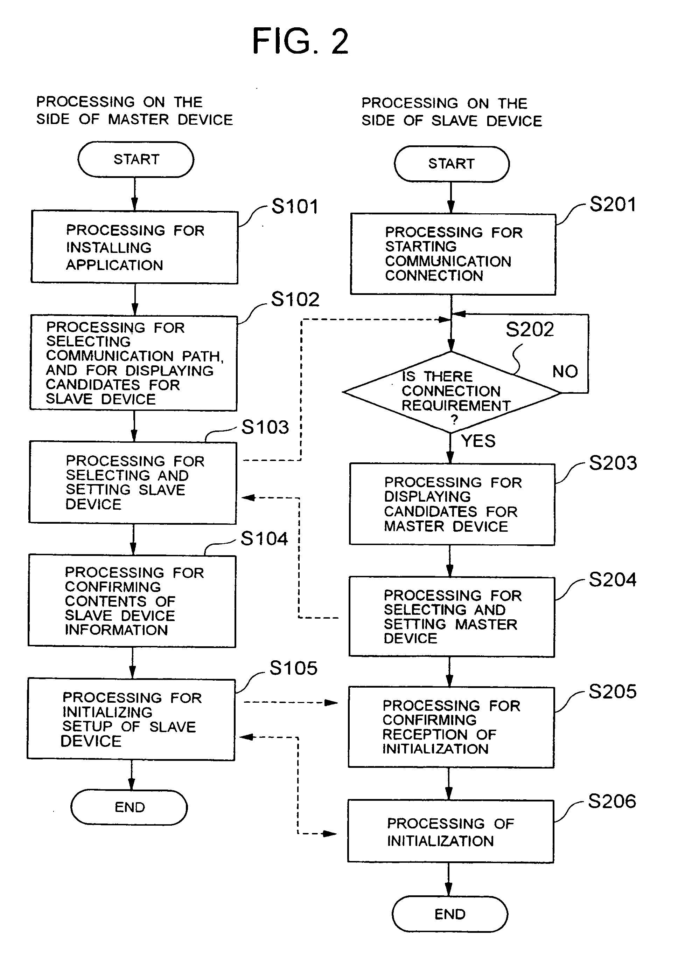

First, the operation of the processing of registration and certification between the master device 10 and the slave device 20 will be described with reference to a flow chart shown in Fig. 2. In the processing of registration and certification, processing of cross-certification between both devices communicating with each other, processing of initialization of each device and the like are carried out.

First, referring to Fig. 2, processing on the side of the master device 10 will be described. In step S101 of Fig. 2, processing for installing various application software programs used in this system, and processing for confirming the installation thereof are carried out.

Also in the same step (S101), processing for inputting various types of user information and for determining a certification number (hereinafter called "device ID") of the personal computer, the server or the like, which composes the master device 10, is carried out. In the processing for determining the device ID, for example, the user may input the individually predetermined device ID. Otherwise, the master device 10 accesses the external network 30 to connect with a Web site on the Internet, and the device ID may be assigned after a user name is inputted. Furthermore, processing for copying various programs used in this system, processing of setup and the like are also carried out in step S101.

In the next step S102, processing for selecting a communication path used between both of the master and slave devices 10 and 20, and for displaying candidates for a slave device 20 linkable to the master device 10 is carried out. In other words, the user selects arbitrary means as the communication path, out of wired or wireless communication means provided between both devices 10 and 20, such as, for example, Bluetooth, IEEE1394, USB and the like, in order to select and set the communication path used between both devices 10 and 20.

If there are a plurality of slave devices 20 linkable to the master device 10, every car-mounted or portable slave device 20 is displayed on a display of the master device 10 with each device ID.

After step S102 is completed, the master device 10 advances to the next step S103 to carry out processing for selecting and setting the slave device 20. Namely, the user selects the slave device 20, which the master device 10 allows to connect with, based on the above displayed device IDs, and carries out the set and registration of that slave device 20. By carrying out that processing, the master device 10 sends a connection requirement signal to the selected, set and registered slave device 20 via the communication path set in the above step S102. When the linked slave device 20 sends back a response signal in response to the connection requirement signal, the master device 10 advances to the next steps S104 and S105.

The master device 10 carries out processing for confirming the contents of information related to the linked slave device 20 on the basis of the response signal in step S104. Then, in step S105, the master device 10 carries out processing for initializing the setup of the slave device 20. When the master device 10 already had information about the slave device 20, this step is omitted, so that the processing for initializing the setup is carried out if necessary.

In the processing for initializing the setup of the slave device 20 in step S105, the master device 10 sends a predetermined initialization command signal to the slave device 20 through the communication path described above. The slave device 20, on the other hand, sends back a response signal to the master device 10 in response to the initialization command signal, to inform the master device 10 of information such as the completion of the' initialization processing and the like.

Now, processing on the side of the slave device 20 will be described with reference to the flow chart of Fig. 2.

First, the slave device 20 carries out processing for starting communication connection in step S201. The processing for starting communication connection, which refers to various types of processing necessary for starting communication between the master device 10 and the slave device 20, includes, for example, processing for selecting and setting a communication path used between both of the master and slave devices 10 and 20 and the like, as in the case of step S102 of the master device 10. It is assumed that each slave device 20 has already been assigned to a device ID individually.

When the processing for starting communication connection is completed in step S201, the slave device 20 advances to step S202. In step S202, the slave device 20 carries out processing for waiting for a connection requirement, in which the slave device 20 is waiting that the connection requirement signal, described in the processing on the side of the master device 10, is sent from the master device 10 through the communication path. In other words, the slave device 20 monitors the presence or absence of the connection requirement signal sent from the master device 10 in step S202, and repeats the monitoring operation of step S202 unless the connection requirement signal is detected. To prevent software processing from stagnating during such repeat operation, for example, the slave device 20 may once return its control to a main routine program (not illustrated) at predetermined timing in the process of loop operation shown in step S202.

When the connection requirement signal from the master device 10 is detected in step S202, the slave device 20 advances to step S203 in order to carry out processing for displaying candidates for a master device 10. The processing for displaying the candidates for a master device 10 is processing for, for example, displaying every device such as a personal computer and a server on a display of the slave device 20 with its device ID, when there are plural personal computers or servers as the master device 10 linkable to the slave device 20.

A user operating the slave device 20 carries out processing for selecting and setting the master device 10 in the next step S204. In the processing for selecting and setting the master device 10 in step S204, the user selects and sets the connected personal computer or the server based on the device IDs, out of candidates for the master device 10 displayed in the above step S203. Upon completing this processing on the side of the slave device 20, the slave device 20 sends back a predetermined response signal to the master device 10 through the communication path.

In the next step S205, the slave device 20 checks the initialization command signal sent from the master device 10, and confirms the reception of the initialization command signal. Then, in the next step S206, the slave device 20 carries out processing for initializing each part of the slave device 20, on the basis of the initialization command signal. When the slave device 20 already had information related to the initialization processing, the initialization processing is carried out with the exception of a part included in the information. Upon completing the initialization processing, the slave device 20 sends back the information of completion to the master device 10 via the communication path. Needless to say, various types of information are transferred between both of the master and slave devices 10 and 20 through the communication path as necessary during the initialization processing.

In the above description, both of the master and slave devices 10 and 20 are connected one-to-one through the communication path, but the embodiment of the present invention is not limited to such a case. Needless to say, the present invention is applicable to, for example, n-to-n multi-point connection.

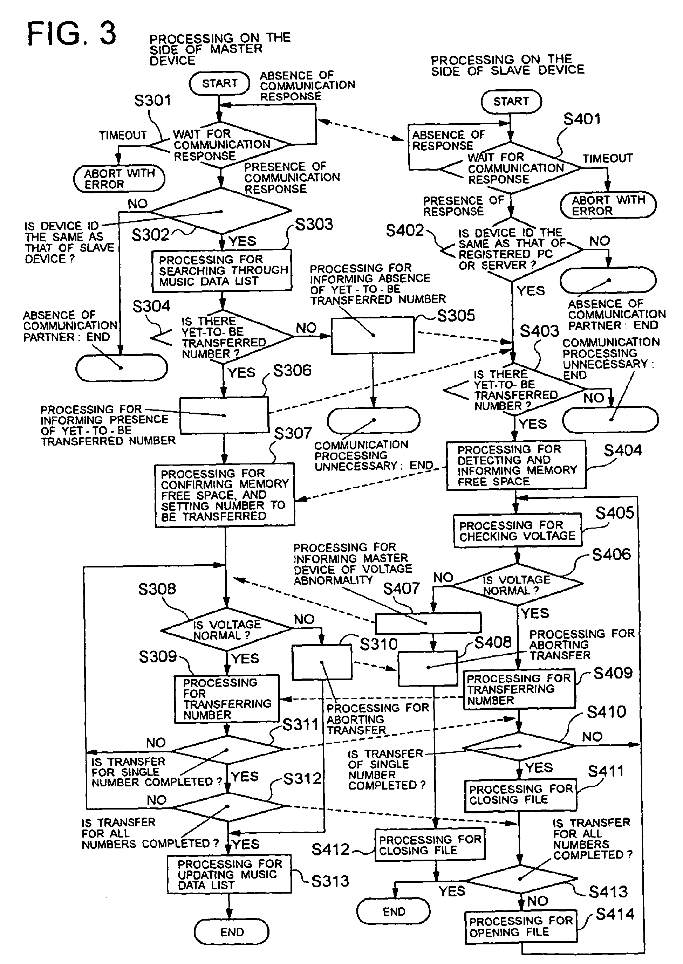

Then, the operation of processing for transferring music contents data between the master device 10 and the slave device 20 will be described with reference to the flow chart shown in Fig. 3. The processing for transferring music contents data is carried out on the precondition that the processing of registration and certification described above has been already carried out between both devises 10 and 20.

Based on the flow chart of Fig. 3, the operation of processing on the side of the master device 10 will be first described. The processing operation may be started in accordance with, for example, a predetermined certain time schedule, or by inputting a predetermined transfer command to the master device 10 by the user. Moreover, the processing operation may be started when the master device 10 detects that a car having the car-mounted slave device 20 or the housing of the portable slave device 20 is put in the vicinity of the master device 10.

First, in step S301 of Fig. 3, the master device 10 carries out processing for waiting for a communication response, in which the master device 10 repeats the detection of the communication response from the slave device 20. Needless to say, the communication response is transferred through the communication path selected and set between both devices 10 and 20 during the processing of registration and certification described above.

The master device 10 repeats the detecting operation of the communication response from the slave device 20 in step S301. When the communication response is not detected even if predetermined time has elapsed, the master device 10 certifies a timeout in the processing for waiting for the communication response, and ends processing shown in Fig. 3 due to the occurrence of communication response error.

When the communication response from the slave device 20 is detected, on the other hand, the master device 10 advances to the next step S302, and checks the device ID of the slave device 20 which is included in the detected communication response. When the device ID is judged to be different from that of the set and registered slave device, the master device 10 judges that that slave device is not a partner for transferring contents data, and hence ends processing on the side of the master device 10.

In step S302, on the other hand, when it is judged that the slave device 20, which sent the communication response, corresponds to the registered device ID, the master device 10 advances to step S303. In step S303, the master device 10 carries out processing for searching through a music contents data list, which is provided in a memory region inside the device.

In the music contents data list, the titles of music contents data, which the master device 10 has ever obtained from a music recording medium 40 such as a CD and the like, or from a music distribution site through the external network 30, are recorded. An identifier in a predetermined format is given to each title included in the list, and, the transfer flag of contents data of a number may be formed by use of, for example, a bit included in the identifier. Namely, the transfer flag is set when contents data of the number obtained by the master device 10 is stored in the data storage, and the transfer flag is reset when contents data of the number is transferred to the slave device 20.

Therefore, the master device 10 can easily distinguish between numbers which have already transferred to the slave device 20 and numbers which have not transferred yet, out of numbers included in the list, by checking the transfer flag of each number, in the processing for searching through the music contents data list in step S303.

When it is judged that all transfer flags have been reset in step S304, in other words, when it is judged that all of the music contents data stored in the data storage of the master device 10 have been transferred to the slave device 20 and there is no music contents data to be newly transferred, the master device 10 advances to step S305. In step S305, the master device 10 informs the slave device 20 that there is no number to be transferred, and ends the processing on the side of the master device 10.

On the other hand, when it is judged that there is at least one or more set transfer flags in step S304, in other words, when it is judged that there is a number to be transferred to the slave device 20, the master device 10 advances to step S306, to inform the slave device 20 that there is a number to be transferred. Then, in the next step S307, the master device 10 carries out processing for confirming memory free space in the slave device 20 and for setting the number to be transferred.

Now, the contents of step 5307 will be hereinafter described in detail.

First, in step S307, the master device 10 confirms detection data of the memory free space of the storage 26 for storing music, which is sent from the slave device 20. Then, the master device 10 compares the memory free space with the contents data size of the numbers to be transferred, in order to select music contents data to be transferred to the slave device 20.

As for the selection of music contents data to be transferred to the slave device 20, numbers the contents data size of which is transferable may be simply combined and set on the basis of the memory free space, or numbers in a specific category may be set by priority on the basis of a special command from the user. Otherwise, the master device 10 may access the slave device 20 to make the slave device 20 delete numbers, which are obtained a long time ago or which are reproduced with low frequency, from the storage 26 for storing music. After expanding the memory free space, music contents data is transferred. When there is sufficient free space, as a matter of course, all of music contents data, on which the transfer flags are set, may be set to be transferred at a time.

When the processing for setting the numbers to be transferred is completed, the master device 10 advances to step S308 to monitor notification about voltage abnormality, which is sent from the slave device 20. As to processing for issuing the notification about voltage abnormality from the slave device 20, it will be explained in processing on the side of the slave device 20 described later.

When the notification about voltage abnormality from the slave device 20 is undetected, and the power supply voltage of the slave device 20 is judged to be normal in step S308, the master device 10 advances to step S309 to carry out processing for transferring music contents data. Namely, the master device 10 extracts yet-to-be transferred music contents data from the data storage on the basis of a setup in the previous step S307, and transfers it to the slave device 20 on the basis of a predetermined communication format and communication protocol.

The master device 10 always monitors the occurrence of data error, the occurrence of a timeout in the communication protocol and the like during the transfer of music contents data, though they are omitted in the flow chart of Fig. 3.

The master device 10 advances to step S311 upon transferring the predetermined length of contents data to the slave device 20, and judges whether or not the transfer of music contents data for a single number is completed. To detect the completion of the transfer of the single number in step S311, for example, a specific delimiter may be attached to the end of each number of music contents data, and the completion of the transfer of the single number may be detected by the detection of the delimiter. Otherwise, a predetermined number of data packets are assigned to each number of music contents data, and the completion of the transfer may be detected by counting the number of the transferred data packets.

When the transfer of music contents data for the single number is judged to be completed in step S311, the master device 10 informs the slave device 20 that the transfer of music contents data for the single number is completed, and advances to the next step S312.

In step S312, it is judged that whether or not the transfer of all numbers set in step S307 is completed. When it is judged that the transfer of all numbers is completed, the master device 10 informs the slave device 20 that the transfer of contents data for all numbers to be transferred is completed, and then advances to the next step S313.

In step S313, the master device 10 carries out processing for updating the music contents data list, namely, processing for resetting the transfer flags of the numbers which have been transferred, and then ends the processing on the side of the master device 10 shown in Fig. 3.

In steps S311 and S312, when it is judged that the transfer of the single number or all numbers are uncompleted, the master device 10 returns to step S308 and repeats the foregoing processing.

When the power supply voltage of the slave device 20 is judged to be abnormal in step S308, the master device 10 advances to step S310, and informs the slave device 20 that processing for transferring music contents data is aborted. Then, the master device 10 advances to step S313 to reset the transfer flags of numbers which have already been transferred, and ends processing on the side of the master device 10.

Then, processing on the side of the slave device 20, which is shown in the flow chart of Fig. 3, will be described.

This processing operation may be started in accordance with, for example, a predetermined certain time schedule, or by inputting a predetermined transfer command to the slave device 20 by the user. Moreover, the processing operation may be started when the slave device 20 detects that a car having the car-mounted slave device 20 or the housing of the portable slave device 20 is put in the vicinity of the master device 10, in conjunction with a GPS device (not illustrated).

First, in step S401 of Fig. 3, the slave device 20 carries out processing for waiting for a communication response, in which the slave device 20 repeats the detection of the communication response from the master device 10. Needless to say, the communication response is transferred through the communication path selected and set between both devices 10 and 20 during the processing of registration and certification described above.

The slave device 20 repeats the detecting operation of the communication response from the master device 10. When the communication response is not detected even if predetermined time has elapsed, the slave device 20 certifies a timeout in the processing for waiting for the communication response, and ends processing on the side of the slave device 20 shown in Fig. 3 due to the occurrence of communication response error.

When the communication response from the master device 10 is detected, on the other hand, the slave device 20 advances to the next step S402, and checks the device ID of the master device 10, which is included in the detected communication response. When the device ID is judged to be different from that of the personal computer or server, which is set and registered in the slave device 20, the slave device 20 recognizes that that personal computer or server is not a partner for transferring contents data, and hence ends processing on the side of the slave device 20.

When it is judged that the master device 10 which has sent the communication response corresponds to the registered device ID in step S402, on the other hand, the slave device 20 advances to step S403, and judges notification relating to the presence or absence of a number next transferred from the master device 10.

In step S403, when the notification from the master device 10 indicates the absence of a number to be transferred, the slave device 20 judges that communication processing with the master device 10 is unnecessary, and hence ends the processing on the side of the slave device 20 shown in Fig. 3.

In step S403, on the other hand, when the notification from the master device 10 indicates the presence of a number to be transferred, the slave device 20 advances to the next step S404. The slave device 20 detects the memory free space of the storage 26 for storing music, and informs the master device 10 of a result.

Then, the slave device 20 advances to steps S405 and S406, and carries out processing for checking voltage. In the processing for checking voltage, it is checked that whether or not the voltage value of the power supply circuit 29 in the slave device 20 is in a normal value. The checked power supply voltage is, for example, the terminal voltage of a car battery in the case of the car-mounted slave device 20, and is the terminal voltage of an internal battery in the case of the portable slave device 20.

The value of the power supply voltage is judged to be normal in steps S405 and S406, the slave device 20 advances to the next step S409, to start the transfer processing of music contents data between the master device 10 and the slave device 20. Namely, the slave device 20 temporarily stores music contents data, which is successively transferred from the master device 10 on the basis of the predetermined communication format and communication protocol, in the buffer memory 23.

Then, when the slave device 20 receives notification which indicates the completion of the transfer of contents data for the single number from the master device 10, the slave device 20 judges that the transfer of contents data for the single number has been completed, and advances to step S411. In step S411, the slave device 20 moves contents data stored in the buffer memory 23 to the music contents data file on the storage 26 for storing music, and then temporarily closes the music contents data file.

At the same time, the slave device 20 updates a play list by adding the title of transferred music contents data to the play list. The play list, which is stored in a memory area provided in the memory region inside the slave device 20, is a list on which the titles of reproducible numbers by the slave device 20 at that time are recorded.

Then, the slave device 20 receives notification which indicates the completion of the transfer of all numbers from the master device 10. When it is judged that the transfer of all numbers has been completed in step S413, the slave device 20 ends the processing on the side of the slave device 20.

When it is judged that the transfer of contents data for the single number is uncompleted in step S410, on the other hand, the slave device 20 returns to step S405 in order to repeat the processing of step S405 and thereafter, such as processing for checking voltage, for transferring the number and the like. Since it is unnecessary to always carry out the processing for checking voltage in such repeated processing, the processing for checking voltage may be carried out at a predetermined number of repeat or at predetermined time intervals.

It is judged that the transfer of all numbers set to be transferred has not been completed in step S413, the slave device 20 opens the music contents data file on the storage 26 for storing music in step S414, and returns to step S405.

On the other hand, when the voltage value of the power source is judged to be abnormal in step S406, the following processing procedure is carried out. Namely, the slave device 20 advances to step S407, and informs the master device 10 through the communication path that the value of the power supply voltage is abnormal. Then, processing for aborting the transfer of music contents data is carried out in step S408, on the basis of predetermined procedure between the master device 10 and the slave device 20. After that, the slave device 20 closes the music contents data file in the storage 26 for storing music in step S412. Then, the slave device 20 adds the titles of numbers which have been transferred till then, and ends the processing on the side of the slave device 20.

The embodiment of the present invention is not limited to the embodiment described above. Contents data transferred from the master device 10 to the slave device 20, for example, may includes image contents data which is obtained from a recording medium such as a DVD and the like, and from a Web site on the Internet and the like.

In the flow chart shown in Fig. 3, a requirement for aborting the transfer processing of contents data is only abnormality in the power supply voltage of the slave device 20. It is possible, however, to add another requirement such as increase in temperature inside the housing of the slave device 20 and the like.

According to an embodiment, there is provided a data transfer and reproduction system which transfers contents data such as music and the like from a master device such as a personal computer and the like to a slave device such as a car-mounted audio device and the like, without putting an operational burden on a user. Certification is registered between the slave device and the master device which transfers contents data, and contents data is transferred between the devices the certification of which has been registered. Of contents data stored in memory in the master device, contents data with a "yet-to-be transferred" identifier is transferred to the slave device at predetermined timing. When the functional disturbance of the slave device is detected during transfer, the transfer of contents data is aborted. The timing of the transfer may be in accordance with a predetermined time schedule, or a transfer command from the user. Otherwise, the transfer may be carried out, when it is detected that the slave device is put in the vicinity of the master device.

## Claims

1. A data transfer and reproduction system comprising:
a master device (10) including a memory means for storing pieces of contents data in advance, and a transfer means for selectively transferring each piece of contents data stored in said memory means; and
a slave device (20) including a receiver/memory means (26) for receiving and storing said piece of contents data transferred from said master device (10), and a reproduction and player means for selectively reproducing and playing said piece of contents data stored in said receiver/memory means (26) in response to a reproduction command, **characterized in that**:
said master device memory means forms and stores a "yet-to-be transferred" identifier corresponding to each piece of contents data, said identifier designating that said piece of contents data is not transferred yet, and
said transfer means selects and transfers said piece of contents data corresponding to said "yet-to-be transferred" identifier.

2. The data transfer and reproduction system according to claim 1, wherein
said transfer means carries out a transfer operation of said piece of contents data in accordance with a predetermined time schedule.

3. The data transfer and reproduction system according to claim 1 or 2, wherein
said transfer means carries out a transfer operation of said piece of contents data, when each of said master device (10) and said slave device (20) detects a transfer command of said piece of contents data.

4. The data transfer and reproduction system according to one of the preceding claims, wherein
said transfer means carries out a transfer operation of said piece of contents data, when it is detected that said slave device (20) is in the vicinity of said master device (10).

5. The data transfer and reproduction system according to one of the preceding claims, wherein
said slave device (20) further includes a disturbance notification means for detecting functional disturbance of said own slave device and notifying said master device (20) of said functional disturbance,
wherein said transfer means aborts a transfer operation of said piece of contents data in response to notification.

6. The data transfer and reproduction system according to claim 5, wherein
said transfer means carries out said transfer operation of said piece of contents data, when recovery from said functional disturbance of said slave device is detected.

7. The data transfer and reproduction system according to claim 5 or 6, wherein
said functional disturbance of said slave device includes abnormality in a power supply voltage value supplied to said slave device (20).

8. The data transfer and reproduction system according to one of the preceding claims, wherein
each piece of contents data is music data and control data accompanying the music data.

9. The data transfer and reproduction system according to claim 8, wherein
each piece of contents data further includes image data and control data accompanying the image data.

## Patentansprüche

1. Datentransfer- und -wiedergabesystem, das Folgendes aufweist:
eine Hauptvorrichtung (10) mit einer Speichereinrichtung zum Speichern von Stücken von Inhaltsdaten im Voraus und einer Transfereinrichtung zum selektiven Transferieren jedes in der Speichereinrichtung gespeicherten Stücks von Inhaltsdaten; und
eine Nebenvorrichtung (20) mit einer Empfänger/Speicher-Einrichtung (26) zum Empfangen und Speichern des von der Hauptvorrichtung (10) transferierten Stücks von Inhaltsdaten und einer Wiedergabe- und Abspieleinrichtung zum selektiven Wiedergeben und Abspielen des in der Empfänger/Speicher-Einrichtung (26) gespeicherten Stücks von Inhaltsdaten in Reaktion auf einen Wiedergabebefehl, **dadurch gekennzeichnet, dass**:
die Speichereinrichtung der Hauptvorrichtung einen "noch-zu-transferieren"-Identifizierer entsprechend jedem Stück von Inhaltsdaten ausbildet und speichert, wobei der Identifizierer bestimmt, dass das Stück von Inhaltsdaten noch nicht transferiert ist, und
die Transfereinrichtung das Stück von Inhaltsdaten entsprechend dem "noch-zu-transferieren"-Identifizierer auswählt und transferiert.

2. Datentransfer- und -wiedergabesystem nach Anspruch 1, wobei
die Transfereinrichtung eine Transferoperation des Stücks von Inhaltsdaten gemäß einem vorbestimmten Zeitplan ausführt.

3. Datentransfer- und -wiedergabesystem nach Anspruch 1 oder 2, wobei
die Transfereinrichtung eine Transferoperation des Stücks von Inhaltsdaten ausführt, wenn jede der Hauptvorrichtung (10) und der Nebenvorrichtung (20) einen Transferbefehl des Stücks von Inhaltsdaten erfasst.

4. Datentransfer- und -wiedergabesystem nach einem der vorangehenden Ansprüche, wobei
die Transfereinrichtung eine Transferoperation des Stücks von Inhaltsdaten ausführt, wenn sie erfasst, dass die Nebenvorrichtung (20) in der Nähe der Hauptvorrichtung (10) ist.

5. Datentransfer- und -wiedergabesystem nach einem der vorangehenden Ansprüche, wobei
die Nebenvorrichtung (20) weiterhin eine Störungsmeldungseinrichtung zum Erfassen einer Funktionsstörung der Nebenvorrichtung selbst und zum Melden der Funktionsstörung zur Hauptvorrichtung (10) enthält,
wobei die Transfereinrichtung eine Transferoperation des Stücks von Inhaltsdaten in Reaktion auf die Meldung abbricht.

6. Datentransfer- und -wiedergabesystem nach Anspruch 5, wobei
die Transfereinrichtung die Transferoperation des Stücks von Inhaltsdaten ausführt, wenn eine Erholung der Nebenvorrichtung von der Funktionsstörung erfasst wird.

7. Datentransfer- und -wiedergabesystem nach Anspruch 5 oder 6, wobei
die Funktionsstörung der Nebenvorrichtung eine Anormalität bezüglich eines zur Nebenvorrichtung zugeführten Energieversorgungsspannungswerts enthält.

8. Datentransfer- und -wiedergabesystem nach einem der vorangehenden Ansprüche, wobei
jedes Stück von Inhaltsdaten Musikdaten und die Musikdaten begleitende Steuerdaten sind.

9. Datentransfer- und -wiedergabesystem nach Anspruch 8, wobei
jedes Stück von Inhaltsdaten weiterhin Bilddaten und die Bilddaten begleitende Steuerdaten enthält.

## Revendications

1. Système de transfert et de reproduction de données comprenant :
un dispositif maître (10) comprenant un moyen de mémoire pour stocker des fragments de données de contenus à l'avance, et un moyen de transfert pour transférer sélectivement chaque fragment de données de contenus stocké dans ledit moyen de mémoire ; et
un dispositif esclave (20) comprenant un moyen de réception/mémoire (26) pour recevoir et stocker ledit fragment de données de contenus transféré à partir dudit dispositif maître (10), et un moyen de reproduction et de lecture pour reproduire et lire sélectivement ledit fragment de données de contenus stocké dans ledit moyen de réception/mémoire (26) en réponse à un ordre de reproduction, **caractérisé en ce que** :
ledit moyen de mémoire du dispositif maître forme et stocke un identifiant « encore à transférer » correspondant à chaque fragment de données de contenus, ledit identifiant indiquant que ledit fragment de données de contenus n'est pas encore transféré, et
ledit moyen de transfert sélectionne et transfère ledit fragment de données de contenus correspondant audit identifiant « encore à transférer ».

2. Système de transfert et de reproduction de données selon la revendication 1, dans lequel
ledit moyen de transfert effectue une opération de transfert dudit fragment de données de contenus selon un programme prédéterminé.

3. Système de transfert et de reproduction de données selon la revendication 1 ou 2, dans lequel
ledit moyen de transfert effectue une opération de transfert dudit fragment de données de contenus, lorsque chacun dudit dispositif maître (10) et dudit dispositif esclave (20) détecte un ordre de transfert dudit fragment de données de contenus.

4. Système de transfert et de reproduction de données selon l'une quelconque des revendications précédentes, dans lequel
ledit moyen de transfert effectue une opération de transfert dudit fragment de données de contenus, lorsqu'il est détecté que ledit dispositif esclave (20) se trouve au voisinage dudit dispositif maître (10).

5. Système de transfert et de reproduction de données selon l'une quelconque des revendications précédentes, dans lequel
ledit dispositif esclave (20) comprend en outre un moyen de notification de perturbations pour détecter une perturbation fonctionnelle dudit dispositif esclave et notifier ladite perturbation fonctionnelle audit dispositif maître (20),
dans lequel ledit moyen de transfert abandonne une opération de transfert dudit fragment de données de contenus en réponse à une notification.

6. Système de transfert et de reproduction de données selon la revendication 5, dans lequel
ledit moyen de transfert effectue ladite opération de transfert dudit fragment de données de contenus, lorsqu'une récupération de ladite perturbation fonctionnelle dudit dispositif esclave est détectée.

7. Système de transfert et de reproduction de données selon la revendication 5 ou 6, dans lequel
ladite perturbation fonctionnelle dudit dispositif esclave comprend une anomalie dans une valeur de tension d'alimentation électrique fournie audit dispositif esclave (20).

8. Système de transfert et de reproduction de données selon l'une quelconque des revendications précédentes, dans lequel
chaque fragment de données de contenus comprend des données de musique et des données de commande accompagnant les données de musique.

9. Système de transfert et de reproduction de données selon la revendication 8, dans lequel
chaque fragment de données de contenus comprend en outre des données d'image et des données de commande accompagnant les données d'image.
